# EUROPEAN PATENT SPECIFICATION

(11) **EP 0 760 511 B1**
(45) Date of publication and mention of the grant of the patent: **24.07.2002**
(21) Application number: 96870110.2
(22) Date of filing: 21.08.1996
(51) Int. Cl.: G11B 27/11, G11B 27/34, G11B 33/10, G11B 23/087, G11B 23/30

(54) **Device for consulting information in the memory of a cassette**
Vorrichtung zum Abfragen von Information im Kassettenspeicher
Dispositif de consultation d'informations dans la mémoire d'une cassette

(30) Priority: 01.09.1995 BE 9500729
(43) Date of publication of application: 05.03.1997
(73) Proprietor: STAAR SOCIETE ANONYME, B-1200 Bruxelles (BE)
(72) Inventor: d'Alayer de Costemore d'Arc Stéphane, Marie André, 1474 Ways (BE)
(74) Representative: Overath, Philippe

(56) References cited:
- EP-A- 0 583 904
- EP-A- 0 599 718
- EP-A- 0 603 808
- EP-A- 0 622 794
- EP-A- 0 628 965
- WO-A-91/02355
- WO-A-93/08571
- WO-A-93/16475
- DE-A- 3 435 506
- FR-A- 2 461 299
- FR-A- 2 694 829
- GB-A- 2 043 982
- PATENT ABSTRACTS OF JAPAN vol. 95, no. 001 & JP-A-07 006464 (HITACHI LTD;OTHERS: 01), 10 January 1995,
- PATENT ABSTRACTS OF JAPAN vol. 14, no. 257 (E-0936), 4 June 1990 & JP-A-02 076377 (CANON INC.), 15 March 1990,

## Description

The present invention relates to playback/recording units comprising read devices for cassettes provided with an electronic memory storing information relative to cassettes, the supports (magnetic tape, disc,...) within the cassettes and the recordings made thereon. It relates more particularly to improvements in read devices for accessing the memory and for processing information stored therein.

As described in detail in the U.K. patent 2 043 982 of the applicant, a playback/recording unit comprises means such as a connector for cooperating with the terminals of a memory once a cassette has been set in operative position in said units. This connection, working-out fixed contacts inside the unit, ensures among others that recording of information be not disturbed by any extraneous information or external commands, for instance while the processing of such information takes place simultaneously with the recording of data on the support.

Most of the time, users forget to take note of the recordings made on standard cassettes, such omission is very frequent with cassettes including an electronic memory.

Further, most users wish to check or simply be informed of the content of the memory of the various cassettes that they own or just of their remaining recording capacity without desiring to playback said cassettes. Until now, the users must load each cassette in a unit, wait for the read-out of the memory information, then unload the cassette.

As can be easily understood, those various steps are time consuming, boring and further cannot be performed as long as the unit either plays back or records a cassette or has its timer set. On another hand, those various steps drastically increase operation cycles of the cassette loading mechanism and thus its wear.

To access the information contained in memories, it has been proposed to provide a storage device for cassettes separate from the playback/recording unit which has memory access devices in each storage compartment, as disclosed in following patent applications : EP 0 583.904 (JP 237618/92), PCT WO 93/08571, PCT WO 93/16475, but because such devices require a complete electronics : power supply, a central processing unit, interface circuits,..., they are rather expensive and sales have been marginal at best.

The aim of the present invention is to cope with the above-mentioned drawbacks by proposing a simple, low cost and user friendly device allowing users to quickly consult the content of the memory of a particular cassette without having to load said cassette in operative position in a playback/recording unit.

A second aim of this invention is to avoid users having to buy additional specific accessories.

A third aim of the invention is to make further use of devices or elements already present in the playback/recording unit to keep cost low.

Another aim of the invention is to safeguard cassettes against mispositioning upon reading out of their memory content to prevent any misreading, misconnection or damage to the contacts, terminals,....

In view of achieving those aims, the main object of the present invention is characterized by the content of the main claim.

Numerous characteristics, advantages will appear from the description of different embodiments given here-below in a non-limiting way and to which improvements can be made without departing from the scope of the invention, for which :
- Fig. 1 schematically shows a unit incorporating a first embodiment of the invention,
- Fig. 2 is similar to Fig. 1 but represents another embodiment,
- Fig. 2B is a detailed view of an element of Fig. 2, in operative position but without cassette,
- Fig. 3 discloses a cassette incorporating a memory, shown from the back,
- Fig. 4 is a lateral section view of an element shown on Fig. 2 with a cassette inserted,
- Fig. 4A is similar to Fig. 4, the element being in the position of Fig. 2B,
- Fig. 5 is similar to Fig. 4, the cassette being mispresented,
- Figs. 6 and 6A are top section views along planes D-D and C-C of Figs. 4, respectively 4A,
- Figs. 7 and 7A show details indicated by the locations X and Z of Figs. 6, respectively 6A,
- Fig. 8 is a schematic electronic diagram of the various embodiments,
- Fig. 9 is a front view of another embodiment,
- Fig. 10 is a lateral section view along plane A-A of an element of Fig. 9,
- Fig. 10A is similar to Fig. 10, the read device being accessible,
- Fig. 11 is a top section view of the element shown on Fig. 10A along plane B-B of Fig. 9,
- Fig. 11A is similar to Fig. 11, a cassette being properly and fully inserted,
- Fig. 12 shows a detail of the embodiment of Figs. 9 to 11A,
- Fig. 13 shows a detail of a further embodiment.

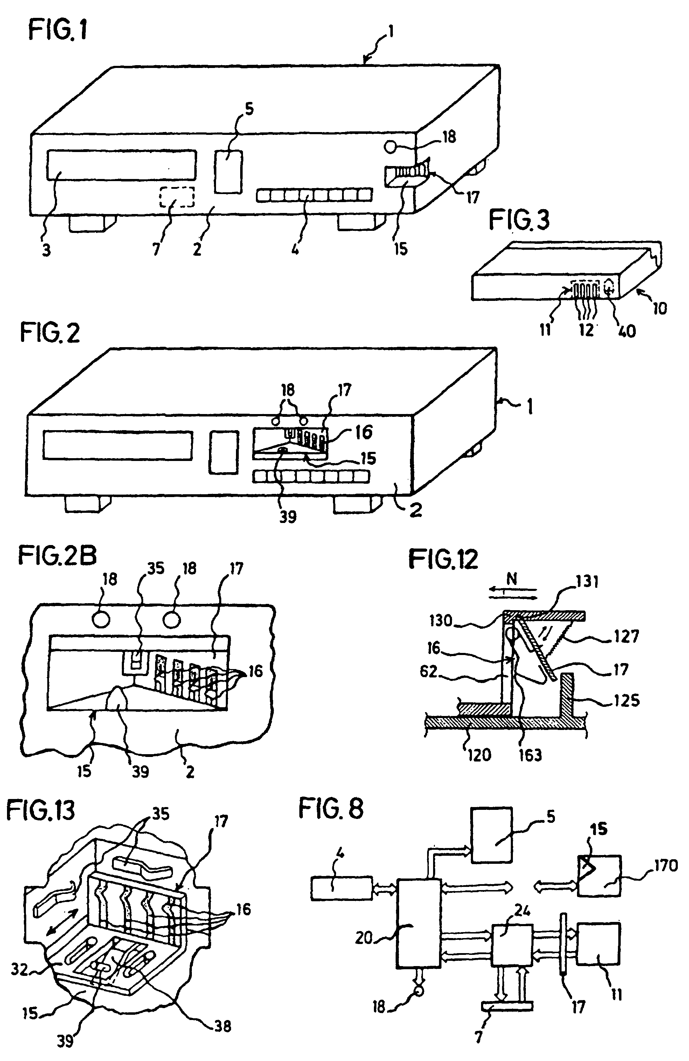

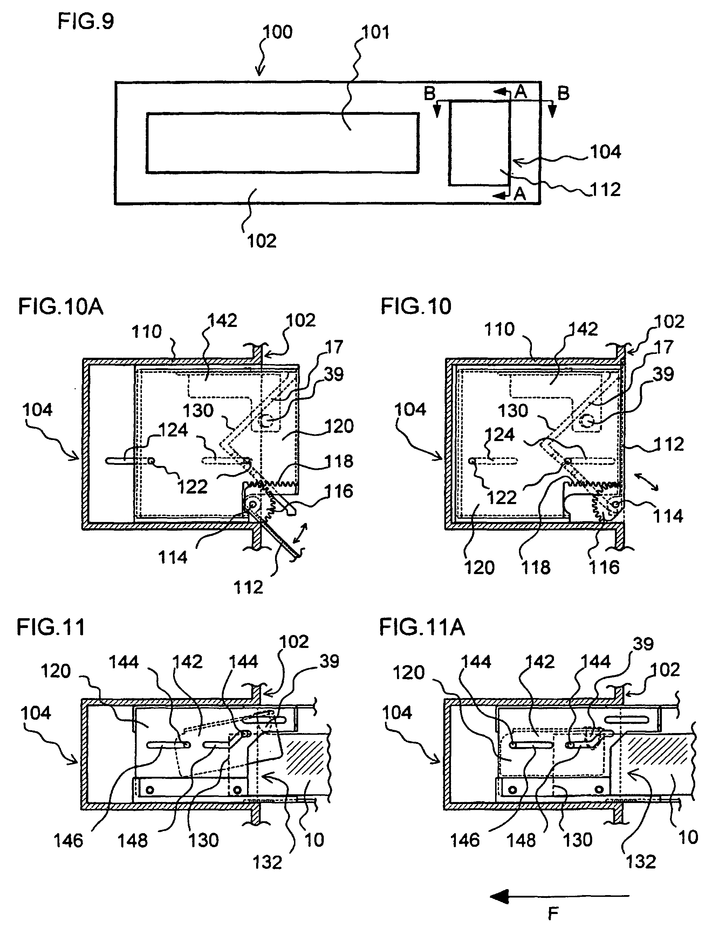

As shown schematically on Fig. 1, a playback/recording unit 1 for cassettes of magnetic tape comprises a front panel 2 incorporating a slot 3 for insertion of a cassette in a loading mechanism or its removal from it, a control panel 4 and generally a display 5 which can be incorporated in the unit 1 or independent and connected to said unit, such as f.i. a TV set, a monitor. It further contains standard - thus not shown - recording/playback means for the tape housed in the cassette as well as a connector 7 connecting a memory associated with a cassette in operative position to control circuits 20 of the unit 1 as shown on Fig. 8 and disclosed in details in the U.K. patent 2 043 982. A remote control 170 of the unit 1 is shown on Fig. 8.

Fig. 3 shows the back of a cassette 10 including a memory 11 incorporated in its shell and comprising terminals 12, here four in total, which are located externally in a standardized location, f.i. nearby a corner. Thus, when a cassette 10 is set in operative position, the circuits shown on Fig. 8 and present in the unit 1 ensure full processing of data in the memory 11 and f.i. their display or writing of new data upon recording operations. Further, the cassette shell is conventionally provided with holes 40 (one being shown on Fig. 3) generally adjacent the back corners for ensuring its centering in operative position or the detection of some specific characteristics, such as f.i. recordable, non-recordable cassette, length of tape,.... The cassette 10 shown on Fig. 3 is of the DVC type but it can be of any other types such as DCC, 8 mm. or any other cassette housing an information support such as a tape cartridge, a diskette,....

To allow the user to easily consult the content of a memory associated to a cassette, either when another cassette is inside the unit and/or to avoid loading/unloading the cassette in/from the unit 1, according to the invention, a recess 15 comprising a connector 17 is provided for accessing the memory terminals 12 of a cassette 10. For keeping cost low, the connector 17 is similar to the connector 7 inside the unit 1.

In a first embodiment (Fig. 1) for the DVC cassettes standard, as the terminals of the memory are located on the right hand side on the back wall of the shell of the cassette 10, the recess 15 and connector 17 are located on the right hand side of the front panel 2 so that the user correctly presents the cassette.

The contacts 16 of the connector 17 (Fig. 2B) being preferably resilient, all the user has to do is to push the cassette against them to ensure proper connection between the microprocessor 20 located within the unit 1 and the memory 11. Eventually, the connector 17 can be protected by a movable shutter which can be removed for accessing said connector, f.i. when the wall of the cassette bears against it.

In a second embodiment shown on Fig. 2, the front panel generally made of injected or molded plastic, incorporates a wedge-shaped recess 15 corresponding to the corner of a cassette tilted with respect to said front panel; for a cassette as shown on Fig. 3, the connector 17 is located on the right hand side. For design purposes, the recess 15 can also be protected by a movable shutter or the connector aligned with the front panel and attached to a cable so as to be displaced by the user.

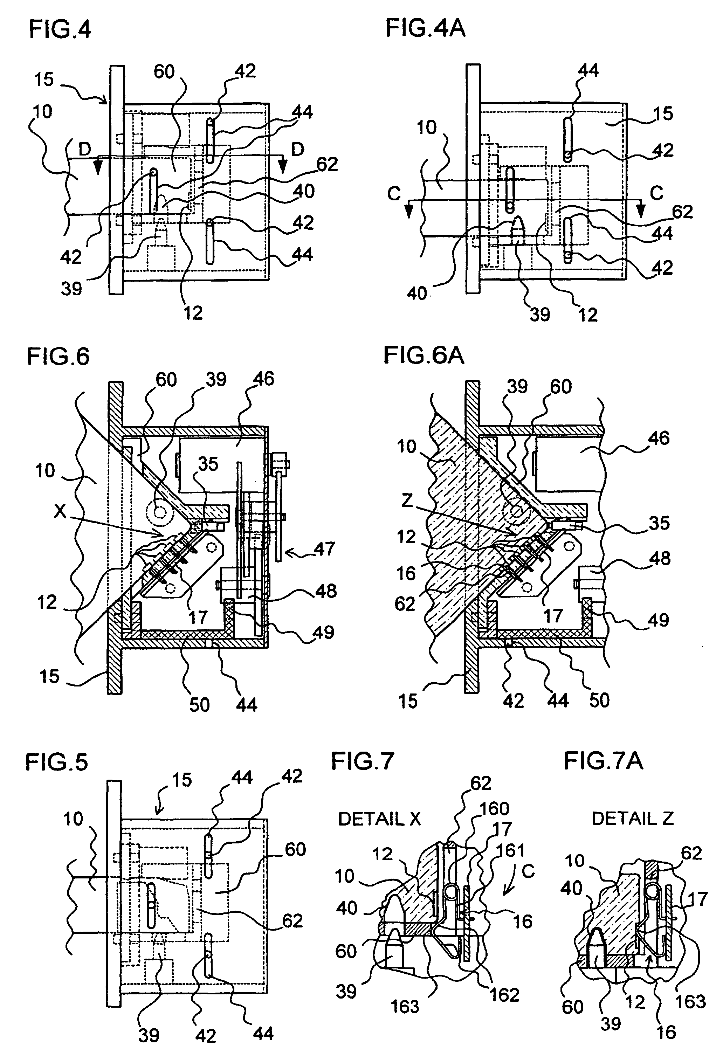

Because the surface of each memory terminal 12 on the back wall of the cassette 10 is located in a small recess for protection against scratches and/or undesired electric connections, the contacts 16 of the connector 17 must protrude from their support by about 3 mms in read position to ensure a positive contact for data processing. As shown more particularly on Figs. 7, 7A, the contacts 16 have a specific shape, namely a longitudinal leg 161 connected to the support 17, a hair pin 160 to rotate them clockwise (arrow C) and two bent portions 162 forming a triangular shape, its apex 163 being applied against a terminal 12.

Such a protrusion is nevertheless a source of potential damages to those contacts 16 as should the cassette not be kept immobile, but undergo a transverse movement (in a plane perpendicular to the contacts 16), then the contacts, which are rather thin because of the required flexibility, can be easily bent thus requiring the servicing of the unit, an undesirable operation.

Therefore, in the most preferred embodiments, means are foreseen to shield those contacts 16 and/or prevent any relative movement between the contacts 16 and the memory terminals 12 when and as long as a connection is established. In inoperative position (Fig. 7), the apex 163 of any contact 16 rests on the external periphery of the housing 60 to limit its movement and thus shield it so that whatever the movement imparted to a cassette, no contact 16 can be touched. The housing 60 is provided with vertical slots or openings 62 in front of each contact 16 to let them protrude when required.

As more specifically shown on Figs 2, 2B, 4 to 6A, a pin 39 matching the hole 40 of a cassette is provided in the recess 15 and riveted to its bottom surface.

When the user desires to consult the content of the memory 11 of a cassette 10, he inserts said cassette in the recess 15 and more particularly in a housing 60 (Fig. 4) movable upwards and downwards thanks to studs 42 attached to it and guided by grooves 44 provided in the lateral walls of the recess 15. As shown on Fig. 6 the up and downward movements of the housing 60 are powered by a micromotor 46, its output shaft driving a set of gears 47, the last gear 48 engaging a rack 49 provided on an edge 50 of said housing 60. The micromotor 46 is connected to a power source through the switch 35.

Should a cassette 10 be properly presented by the user (Figs. 4, 6), then the switch 35 is actuated by the front corner of the cassette and the micromotor 46 powered. As a result, the housing 60 is lowered (Figs. 4A, 6A, 7A) and the pin 39 enters the hole 40 of the cassette located just above it, thus allowing its full downwards movement and at the same time locking the cassette 10 in the read position against any transverse movement. Simultaneously, the contacts 16 of the connector 17 are pivoted clockwise to protrude (Fig. 7A) through the slots 62, each apex 163 being applied against each terminal 12. Processing of data can then take place.

If a cassette 10 is not properly presented (Fig. 5), f.i. with its front wall presented front first or upside-down , then the recess 40 is never in front of the pin 39 and in such case the housing 60 cannot be lowered. Accordingly, the contacts 16 remain shielded by said housing 60 (Fig. 7) and no damage can occur even if the user forces the cassette 10 in the housing 60. In case of DVC, the housing 60 can accept the three cassettes of this standard while their difference in height is compensated by the travelling distance of said housing 60.

A further embodiment (Figs. 9 to 12) is designed for computer back-up systems working-out 8 mm. cassettes and mounted in a slot f.i. of a computer tower.

Such a slot 100 has a standard width and height and incorporates a front opening 101 for inserting a cassette in the playback/recording mechanism. According to the present invention, a read device 104 is provided laterally on the front panel 102 and in the present embodiment positioned vertically, near the opening 101 to fit within the width of the slot 100.

As shown on Fig. 10, this read device mainly comprises a housing 110, a front door 112 pivotable around an axis 114 and bearing a geared sector 116 meshing with gear-teeth 118 provided on a lateral edge of a U-shaped frame 120 which can be translated with respect to the housing 110 thanks to studs 122 mounted on said frame 120 and engaging grooves 124 provided in the lateral sides of the housing 110. As shown on Fig. 10A, a pivotal movement imparted to the door 112 for opening it translates the frame 120 which then protrudes from the front panel 102.

As shown on Fig. 11, the frame 120 bears a housing 130 having an entrance slot 132 and a connector 17 (Figs. 10, 10A). A pin 39 for matching the hole 40 of a cassette is riveted on the movable support 142 which can be translated with respect to the frame 120 thanks to grooves 146, 148 provided in the top and bottom sides of said frame 120 and studs 144 fixed laterally on said support 142. More particularly, the groove 148 has a central tilted portion.

Accordingly, when the user has opened the front door 112 (Fig. 10A), the pin 39 is below the housing 130 (Fig. 11) to let the user freely insert a cassette therein. The frame 120 is locked against translation by a conventional ratchet assembly, thus not shown, and accordingly insertion of a cassette 10 powers a translation (arrow F - Fig. 11A) of the support 142 as the front edge of the cassette abuts against the wall of the housing 130. Further insertion of the cassette 10 powers translation of the support 142 and thus of the studs 144 which follow the grooves 146 and more particularly 148, the profile of which drives the pin 39 towards the cassette (Fig. 11A). Resilient means, not shown, return the housing 130 to its inoperative position (Fig. 10A) upon removal of the cassette. As explained previously, if the cassette is properly inserted, then the pin 39 enters the hole 40 of the cassette and the contacts 16 are made operative; otherwise the pin 39 abuts against the shell of the cassette and the inward movement is immediately blocked because the width of the slot 132 matches the height of the cassette 10.

In this embodiment, the connector 17 supporting the contacts 16 pivots around a shaft 131 (Fig. 12) fixed on a wall of the housing 130 and undergoes the action of the spring 127 to shield the contacts 16 when no cassette 10 is inserted. When a cassette is correctly presented, the support 130 can slightly move (arrows N) to the right and the abutment 125 provided on the frame 120 forces the connector 17 to pivot clockwise to apply the contacts 16 against the terminals 12 of the cassette.

According to another embodiment shown on Fig. 13, the connector 17 is mounted on a support 32 which can be translated with respect to the recess 15 and is connected (not shown) to a lever 38 supporting the pin 39. Accordingly, when a cassette is properly presented, the terminals 12 are applied against the contacts 16 and the connector 17 is thus moved backwards, simultaneously the pin 39 enters the hole 40, preventing any relative movement between the contacts 16 and the terminals 12. Process of data can take place when both switches 35 are closed confirming proper positioning of a cassette in the recess 15.

Means can be provided to power visual and/or audio signals reminding or informing the user that he must keep the cassette pushed against the connector 17. On Fig. 1, a diode 18 connected to the microprocessor 20 powers an optical signal. Accordingly, any interruption of the read-out of the memory can be prevented. In the embodiment of Fig. 2, two diodes 18 are foreseen, one for showing that the microprocessor can read out data from the memory 11 of a cassette 10 inserted in the recess 15, the other one showing that no processing or read-out can take place. When power means, such as the micromotor 46, are used, the motor is driven in reverse direction to release the cassette 10 only after complete data processing.

As shown on Fig. 8, the connector 17, just as the connector 7, is connected through an interface circuit 24 to the microprocessor 20. According to the most preferred embodiment, when the microprocessor 20 does not ensure transmission, management or processing of data in the memory of a cassette in operative position and as long as a cassette is not being moved to operative position, its software checks the connector 17. When it detects that a contact with a memory is established, for instance upon closure of the power line or the switch 35, the microprocessor then powers only a read-out of data within the memory 11.

In the described examples, the contacts 16 of the connector 17 never transmit any power for writing data into the memory to avoid any error or, when the microprocessor detects a cassette being pushed against the connector 17, it prohibits any writing operation in said memory.

The drawings show a home VCR but it is easy to understand that the device of the invention can be easily applied to any other type of unit such as f.i. a portable unit, a camcorder, even a remote control 170 (Fig. 8) of the playback/recording unit.

For remote controls 170, the recess 15, the connector 17 and its associated mechanism (Figs. 4 to 11A) can be located on any appropriate lateral wall.

As can be understood, the above-described embodiments require only one additional connector, all the other circuits being already mounted inside the playback/recording unit and/or its remote control.

Further, by having a connector set on the front panel, outside the unit, the cassette loading mechanism is used only when the user wishes to playback or record a cassette, something which drastically reduces wear, failures.
- 1: recording/playback unit
- 2: front panel
- 3: slot
- 4: control panel
- 5: display
- 7: connector
- 10: cassette
- 11: memory
- 12: terminals
- 15: recess
- 16: contacts
- 17: connector
- 18: diodes
- 20: microprocessor
- 24: interface circuit
- 32: support
- 35: switch
- 38: lever
- 39: pin
- 40: hole
- 42: studs
- 44: grooves
- 46: micromotor
- 47, 48: gears
- 49: rack
- 50: edge
- 60: housing
- 62: slots or openings
- 100: slot
- 101: front opening
- 102: front panel
- 104: read device
- 110: housing
- 112: front door
- 114: axis
- 116: geared sector
- 118: gear-teeth
- 120: U-shaped frame
- 122: studs
- 124: grooves
- 125: abutment
- 127: resilient means
- 130: housing
- 131: axis
- 132: slot
- 142: movable support
- 144: studs
- 146, 148: grooves
- 160: hair pin
- 161: longitudinal leg
- 162: bent portions
- 163: apex
- 170: remote control

## Claims

1. A playback/recording unit (1) comprising a read device inside the unit or in an associated remote control device (170) of said unit to connect with terminals (12) of an electronic memory (11) carried by cassettes (10), said read device comprising a recess or housing (15, 130) receiving the portion of the cassette (10) supporting the terminals (12) and including contacts (16, 163) to engage said terminals (12) without said cassette (10) having to be loaded in operative position inside the playback/reading unit,
**characterized in that**, it further incorporates means (60, 62, 42, 44, 17, 131, 32, 39) operated upon insertion of the cassette (10) in said recess or housing (15, 130) and associated to the contacts (16, 163) to expose said contacts for proper engagement with the respective terminals (12) of the cassette (10) and/or lock said cassette (10) with respect to said contacts (16, 163) against transverse movement.

2. A playback/recording unit according to claim 1, **characterized in that** the means (60, 62, 42, 44, 17, 131, 32) ensure, in the absence of a cassette (10) properly positioned in the recess or housing (15, 60, 130), shielding of the contacts (16, 163) to prevent any engagement by any element other than the terminals (12) of a cassette (10).

3. A playback/recording unit according to claim 2, **characterized in that** the means (60, 62, 42, 44, 17, 131) provide a relative movement between the recess or housing (15, 130) and the contacts (16, 163) to shift them from their shielded position to their operative position for engagement with the terminals (12) of a properly inserted cassette (10).

4. A playback/recording unit according to claim 2, **characterized in that** the contacts (16, 163) are mounted on a support (17) and shielded by a wall (60, 62) of the recess or housing (15, 130).

5. A playback/recording unit according to claim 1, **characterized in that** the means locking the cassette (10) against transverse movement comprise a pin (39) movable to engage a hole (40) provided in the shell of cassettes (10).

6. A playback/recording unit according to claim 5, **characterized in that** the movement of the pin (39) to engage the hole (40) is powered by a relative movement between the contacts (16, 163) and the cassette (10).

7. A playback/recording unit according to any of claims 3 to 6, **characterized in that** the relative movement is ensured by power means (46).

8. A playback/recording unit according to claim 7, **characterized in that** the power means are actuated responsive to the operation of a switch (35) located in the recess or housing (15, 130) and engaged by the shell of a cassette (10).

9. A playback/recording unit according to any of the preceding claims, **characterized in that** it includes warning means (18) to indicate that data processing from the memory (11) is taking place and/or prevent removal of the cassette (10) from said read device during data processing.

10. A playback/recording unit according to any of the preceding claims, **characterized in that** the recess, housing (15, 130) has a wedged shape matching the portion of the cassette (10) carrying the terminals and inserted from the outside for inducing proper presentation by the user of a cassette (10) in said recess, housing (15, 130).

## Patentansprüche

1. Wiedergabe-/Aufnahmeeinheit (1) umfassend eine Lesevorrichtung innerhalb der Einheit oder in einer zugeordneten Fernsteuervorrichtung (170) der Einheit zur Verbindung mit Anschlüssen (12) eines durch Kassetten (10) getragenen elektronischen Speichers (11), wobei der Lesevorrichtung eine Vertiefung oder ein Gehäuse (15, 130)umfasst, die/das den Abschnitt der Kassette (10) aufnimmt, der die Anschlüsse (12) trägt, und Kontakte (16, 163) beinhaltet, um in die Anschlüsse (12) einzugreifen, ohne dass die Kassette (10) in betriebsgemäße Position innerhalb der Wiedergabe-/Aufnahmeeinheit geladen zu werden braucht,
**dadurch gekennzeichnet, dass** sie ferner Mittel (60, 62, 42, 44, 17, 131, 32, 39) enthält, die auf Einlegen der Kassette (10) in die Vertiefung oder das Gehäuse (15, 30) hin betrieben werden und den Kontakten (16, 163) zugeordnet sind, um die Kontakte zum korrekten Ineinandergreifen mit den jeweiligen Anschlüsse (12) der Kassette (10) freizulegen und/oder die Kassette (10) bezüglich der Kontakte (16, 163) gegen transversale Bewegung zu sichern.

2. Wiedergabe-/Aufnahmeeinheit nach Anspruch 1, **dadurch gekennzeichnet, dass** die Mittel (60, 62, 42, 44, 17, 131, 32) in Abwesenheit einer in der Vertiefung, dem Gehäuse (15, 60, 130) korrekt angeordneten Kassette (10) ein Abschirmen der Kontakte (16, 163) sicherstellen, um jeglichen Eingriff durch ein anderes Element als die Anschlüsse (12) einer Kassette (10) zu verhindern.

3. Wiedergabe-/Aufnahmeeineheit nach Anspruch 2, **dadurch gekennzeichnet, dass** die Mittel (60, 62, 42, 44, 17, 131) eine Relativbewegung zwischen der Vertiefung oder dem Gehäuse (15, 130) und den Kontakten (16, 163) vorsehen, um sie von ihrer abgeschirmten Position in ihre Betriebsposition zum Ineinandergreifen mit den Anschlüssen (12) einer korrekt eingelegten Kassette (10) zu verschieben.

4. Wiedergabe-/Aufnahmeeinheit nach Anspruch 2, **dadurch gekennzeichnet, dass** die Kontakte (16, 163) an einem Träger (17) montiert sind und durch eine Wand (60, 62) der Vertiefung oder des Gehäuses (15, 130) abgeschirmt sind.

5. Wiedergabe-/Aufnahmeeinheit nach Anspruch 1, **dadurch gekennzeichnet, dass** die Mittel, die die Kassette (10) gegen eine transversale Bewegung sichern, einen Stift (39) umfassen, der zum Eingriff in ein in der Hülle der Kassetten vorgesehenes Loch (40) bewegbar ist.

6. Wiedergabe-/Aufnahmeeinheit nach Anspruch 5, **dadurch gekennzeichnet, dass** die Bewegung des Stiftes (39) zum Eingriff in das Loch (40) durch eine Relativbewegung zwischen den Kontakten (16, 163) und der Kassette (10) angetrieben wird.

7. Wiedergabe-/Aufnahmeeinheit nach einem der Ansprüche 3 bis 6, **dadurch gekennzeichnet, dass** die Relativbewegung durch Antriebsmittel (46) sichergestellt wird.

8. Wiedergabe-/Aufnahmeeinheit nach Anspruch 7, **dadurch gekennzeichnet, dass** die Antriebsmittel in Antwort auf den Betrieb eines Schalters (35) betätigt werden, der in der Vertiefung oder dem Gehäuse (15, 130) angeordnet ist und durch die Hülle einer Kassette (10) in Eingriff gebracht wird.

9. Wiedergabe-/Aufnahmeeinheit nach einem der vorangehenden Ansprüche, **dadurch gekennzeichnet, dass** sie Warnmittel (18) beinhaltet, um anzuzeigen, dass eine Verarbeitung von Daten von dem Speicher (11) stattfindet und/oder um ein Entfernen der Kassette (10) von der Lesevorrichtung während eines Verarbeitens von Daten zu verhindern.

10. Wiedegabe-/Aufnahmeeinheit nach einem der vorangehenden Ansprüche, **dadurch gekennzeichnet, dass** die Vertiefung, das Gehäuse (15, 130) eine Keilform aufweist, die mit dem Abschnitt der Kassette (10) zusammenpasst, der die Anschlüsse trägt und zum Erzeugen einer korrekten Darstellung durch den Benutzer einer Kassette (10) von außen in die Vertiefung, das Gehäuse (15, 130) eingelegt wird.

## Revendications

1. Appareil de reproduction/enregistrement (1) muni d'un dispositif de lecture placé à l'intérieur de l'appareil ou dans une commande à distance (170) y associée pour être relié aux bornes (12) d'une mémoire électronique (11) portée par des cassettes (10), ledit dispositif de lecture comportant une encoche ou logement (15, 130) recevant la partie de la cassette (10) portant les bornes (12) et comprenant des contacts (16, 163) pour coopérer avec les bornes (12) sans que la cassette (10) ne doive être placée en position opérative à l'intérieur de l'appareil de reproduction/enregistrement,
**caractérisé en ce qu'**il comprend en outre des moyens (60, 62, 42, 44, 17, 131, 32, 39) actionnés lors de l'introduction de la cassette (10) dans ladite encoche ou logement (15, 130) et associés aux contacts (16, 163) pour présenter lesdits contacts en engagement correct avec les bornes respectives (12) de la cassette (10) et/ou bloquer ladite cassette par rapport auxdits contacts (16, 163) contre tout déplacement latéral.

2. Appareil de reproduction/enregistrement selon la revendication 1, **caractérisé en ce que** les moyens (60, 62, 42, 44, 17, 131, 32) assurent, en l'absence d'une cassette (10) correctement positionnée dans l'encoche ou logement (15, 60, 130), la protection des contacts (16, 163) pour éviter tout engagement avec tout élément autre que les bornes (12) d'une cassette (10).

3. Appareil de reproduction/enregistrement selon la revendication 2, **caractérisé en ce que** les moyens (60, 62, 42, 44, 17, 131) procurent un mouvement relatif entre l'encoche ou logement (15, 130) et les contacts (16, 163) pour les faire passer de leur position de protection à leur position opérative où ils entrent en contact avec les bornes (12) d'une cassette insérée correctement.

4. Appareil de reproduction/enregistrement selon la revendication 2, **caractérisé en ce que** les contacts (16, 163) sont montés sur un support (17) et protégés par une paroi (60, 62) de l'encoche ou logement (15, 130).

5. Appareil de reproduction/enregistrement selon la revendication 1, **caractérisé en ce que** les moyens bloquant la cassette (10) contre tout déplacement latéral comprennent un téton (39) mobile pour pénétrer une ouverture (40) prévue dans le boîtier des cassettes (10).

6. Appareil de reproduction/enregistrement selon la revendication 5, **caractérisé en ce que** le mouvement du téton (39) pour pénétrer l'ouverture (40) est assuré par le mouvement relatif entre les contacts (16, 163) et la cassette (10).

7. Appareil de reproduction/enregistrement selon l'une quelconque des revendications 3 à 6, **caractérisé en ce que** le mouvement relatif est assuré par des moyens motorisés (46).

8. Appareil de reproduction/enregistrement selon la revendication 7, **caractérisé en ce que** les moyens motorisés sont mis en oeuvre suite à l'actionnement d'un interrupteur (35) placé dans l'encoche ou logement (15, 130) et actionné par le boîtier d'une cassette (10).

9. Appareil de reproduction/enregistrement selon l'une quelconque des revendications précédentes, **caractérisé en ce qu'**il comporte des moyens d'avertissement (18) pour indiquer que le traitement des données de la mémoire (11) est en cours et/ou interdisant le retrait de la cassette (10) dudit dispositif de lecture pendant le traitement des données.

10. Appareil de reproduction/enregistrement selon l'une quelconque des revendications précédentes, **caractérisé en ce que** l'encoche ou logement (5, 130) possède une forme en coin correspondant à la partie de la cassette (10) portant les bornes et insérée de l'extérieur pour inciter l'utilisateur à la présentation correcte d'une cassette (10) dans ladite encoche, logement (15, 130).
